Europäisches Patentamt

**European Patent Office**

**Office européen des brevets**

(19)

(11) Numéro de publication: **0 145 624**
A2

# DEMANDE DE BREVET EUROPEEN

(21) Numéro de dépôt: **84420202.8**

(22) Date de dépôt: **05.12.84**

(51) Int. Cl.⁴: **B 65 G 57/03,** B 65 G 57/11

---

(30) Priorité: **07.12.83 FR 8319881**

(43) Date de publication de la demande: **19.06.85**
**Bulletin 85/25**

(84) Etats contractants désignés: **BE DE GB IT**

(71) Demandeur: **CEGEDUR SOCIETE DE TRANSFORMATION DE L'ALUMINIUM PECHINEY, 23, Rue Balzac, F-75008 Paris (FR)**

(72) Inventeur: **Teyssedre, Emile, 8, rue des Muguets, F-68600 Biesheim (FR)**
Inventeur: **Deleuze, Michel, 30, avenue Léon Brun, F-82100 Castelsarrazin (FR)**

(74) Mandataire: **Séraphin, Léon et al, PECHINEY 28, rue de Bonnel, F-69433 Lyon Cedex 3 (FR)**

---

(54) **Methode et dispositif pour l'empilage automatique d'objets plats.**

(57) La présente invention concerne un procédé et un dispositif pour l'empilage automatique d'objets plats de mêmes dimensions en plan, en particulier de disques en alliages légers.

La méthode consiste, après avoir aligné les objets dans le sens du déplacement d'un convoyeur, de les engager à la sortie de celui-ci sur deux supports extérieurs divergents, sensiblement horizontaux dont l'écartement transversal, initialement inférieur au diamètre ou à la plus petite diagonale des objets considérés atteint au moins le diamètre ou la plus grande diagonale de ceux-ci.

Il est préférable d'arrêter les objets dans leur chute libre par une (ou plusieurs) butée(s) avant et éventuellement une butée arrière.

Le dispositif correspondant permet par exemple l'empilage sans frottement relatif mutuel excessif de disques d'alliages légers à une cadence allant jusqu'à 5 objets par seconde.

## METHODE ET DISPOSITIF POUR L'EMPILAGE AUTOMATIQUE D'OBJETS PLATS

La présente invention concerne un procédé et un dispositif pour l'empilage automatique d'objets plats de mêmes dimensions en plan, en particulier de disques en alliages légers.

Dans un grand nombre de secteurs industriels, des produits plats sont obtenus sur des installations de grand débit et sont évacués par convoyeur, en général par une (ou des) bande(s) transporteuse(s) vers un (ou plusieurs) poste(s) d'empilage, en vue d'un conditionnement, d'un transport ou d'un traitement ultérieur.

Dans l'art antérieur, un dispositif d'empilage consiste à disposer à l'extrémité du convoyeur un réceptacle de section demi-rectangulaire, disposé transversalement par rapport au convoyeur et incliné sur l'horizontale. Les objets s'empilent par simple gravité dans ce réceptacle. Il en résulte cependant deux inconvénients, à savoir d'une part que l'empilage n'est pas parfait, les objets débordants plus ou moins les uns par rapport aux autres, et d'autre part, que ceux-ci risquent d'être détériorés superficiellement en raison de leur glissement relatif lors de l'empilage.

La présente invention pallie ces deux inconvénients.

La méthode consiste après avoir sensiblement aligné les objets dans l'axe de défilement du convoyeur par un moyen connu de la technique antérieure, de les engager à la sortie de celui-ci sur deux supports extérieurs divergents sensiblement horizontaux, dont l'écartement transversal, initialement inférieur au diamètre ou la plus petite diagonale des objets considérés atteint au moins le diamètre ou la plus grande diagonale de ceux-ci; de ce fait, au-delà de cette dernière position (P) l'objet tombe sensiblement à plat suivant une courbe parabolique, grâce à la vitesse acquise, sur la pile d'objets en cours de formation. Si la hauteur entre la position (P) et le sommet de la pile est suffisamment grande vis à vis de la vitesse de déplacement horizontale de l'objet, celui-ci arrive sensiblement verticalement sur le précédent, ce qui évite un glissement mutuel et par suite la détérioration des surfaces en contact.

Cependant, au voisinage de la position (P) l'objet est soumis à un léger moment de basculement, autour d'un axe sensiblement horizontal (Q) lorsque la projection du centre de gravité de l'objet (G) sort du polygone de sustentation résiduel.

Pour éviter cet effet néfaste, il est préférable d'arrêter l'objet dans sa chute libre par une (ou plusieurs) butée(s) avant, avant qu'il n'atteigne le sommet de la pile en cours de formation. La hauteur de chute libre (h) comprise entre (P) et la butée est inférieure à 20 mm et de préférence comprise entre 10 et 20 mm; dans ce cas, l'objet tombe rigoureusement verticalement sur le précédent. Plus la hauteur de chute libre est faible, plus sont grandes la régularité et la précision de l'empilage. La hauteur de chute libre est ajustée par le contrôle de la vitesse de sortie du convoyeur en fonction de la nature et des dimensions des objets à empiler.

L'empilage est encore plus parfait si on utilise, en plus, une butée arrière axiale, délimitant l'espace d'empilement avec un léger jeu, pouvant aller jusqu'à quelques millimètres.

Bien sûr, la pile d'objets en formation peut être stationnaire ou mobile selon un axe vertical. Dans le premier cas, la hauteur totale de chute est variable; dans le deuxième cas, la hauteur totale de chute peut être rendue sensiblement constante par abaissement progressif et programmé de l'embase portant la pile d'objets en cours de sa formation, à l'aide de moyens connus : détecteur de position, dispositifs mécaniques, vérins, etc...

Le dispositif comporte donc essentiellement au niveau de la bande transporteuse deux supports extérieurs divergents sensiblement horizontaux sous forme de glissières, rails, etc... en matériaux adéquats, de préférence axés sur la direction de déplacement des objets alignés.

Pour éviter les détériorations de surface et minimiser la consommation d'énergie, les supports sont de préférence munis de galets cylindriques non métalliques, sensiblement jointifs. Il a été remarqué que le diamètre de galets $\emptyset$g doit être d'autant plus faible que le diamètre ou les diagonales de l'objet ($\emptyset$o) sont plus petits. D'autres moyens tels que des courroies transporteuses motorisées peuvent être également utilisés.

Les angles ($\alpha$) de chacun des supports avec l'axe de défilement sont faibles, en général compris entre 1º et 15º et ils sont de préférence égaux et compris entre 5 et 10º. La précision de l'empilage est d'autant meilleure que les angles ($\alpha$) sont plus petits.

Les supports sont réglables en position symétrique, par rapport à l'axe de défilement, à l'aide d'un dispositif constitué de deux axes transversaux constituant des glissières et d'une vis centrale transversale, commandée à ses extrémités, par un embout carré, qui comporte un filetage à pas inversé qui s'engrène dans des écrous correspondants fixés au support.

Un système analogue permet de déterminer la position de deux règles longitudinales dont l'écartement est égal au diamètre des objets à empiler; celles-ci sont destinées à parfaire le centrage des objets à empiler à l'entrée du dispositif d'empilage. En conséquence, les règles s'étendent de l'extrémité du convoyeur aux supports et possèdent une entrée convergente.

Le dispositif comporte aussi une (ou plusieurs) butée(s) avant qui délimitent l'emplacement des objets lors de leur chute libre. Elles peuvent être constituées soit d'une butée plane perpendiculaire à la direction de défilement des objets, soit de deux tiges cylindriques verticales symétriques par rapport à l'axe de défilement des produits. Pour éviter la détérioration des tranches des objets due aux chocs sur la (ou les) butée(s), celles-ci sont de préférence constituée(s) (ou revêtue(s)) d'un matériau amortisseur tel que le caoutchouc ou une matière plastique.

Le dispositif permettant de régler simultanément la position des deux butées avant, symétriquement par rapport à l'axe de défilement, est constitué de deux bras placés symétriquement par rapport à l'axe de défilement, chacun d'eux portant à une de ses extrémités une butée verticale avant de section circulaire. Le bras de section rectangulaire ou carrée est muni d'une crémaillère sur sa face latérale verticale; ces bras coulissent longitudinalement dans les glissières correspondantes et sont mus par deux pignons identiques, montés sur le même axe vertical et qui engrènent avec les crémaillères. Ces deux pignons sont commandés par un axe portant une manivelle de manoeuvre et un pignon de positionnement, arrêté par un système de blocage.

La butée arrière est disposée verticalement sur l'axe de défilement et est fixée au bâti de façon aussi proche que possible de l'extrémité de la bande transporteuse. Son extrémité supérieure est au niveau de celle-ci et présente, de préférence, un plan incliné vers l'aval, avec un angle ($\beta$) allant jusqu'à 15°.

Si, pour une raison d'encombrement, celle-ci ne peut être placée de façon immédiatement adjacente à l'extrémité de la bande transporteuse, on place de chaque côté de celle-ci dans le sens de défilement, deux chemins de roulement parallèles, munis de galets, dans l'espace compris entre la bande transporteuse et la butée, au niveau des supports.

L'invention sera mieux comprise à l'aide des figures et exemples suivants:

La figure 1 représente en élévation + coupe suivant le tracé AA de la figure 2 de l'ensemble du dispositif d'empilage.

La figure 2 représente une vue en plan de l'ensemble du dispositif.

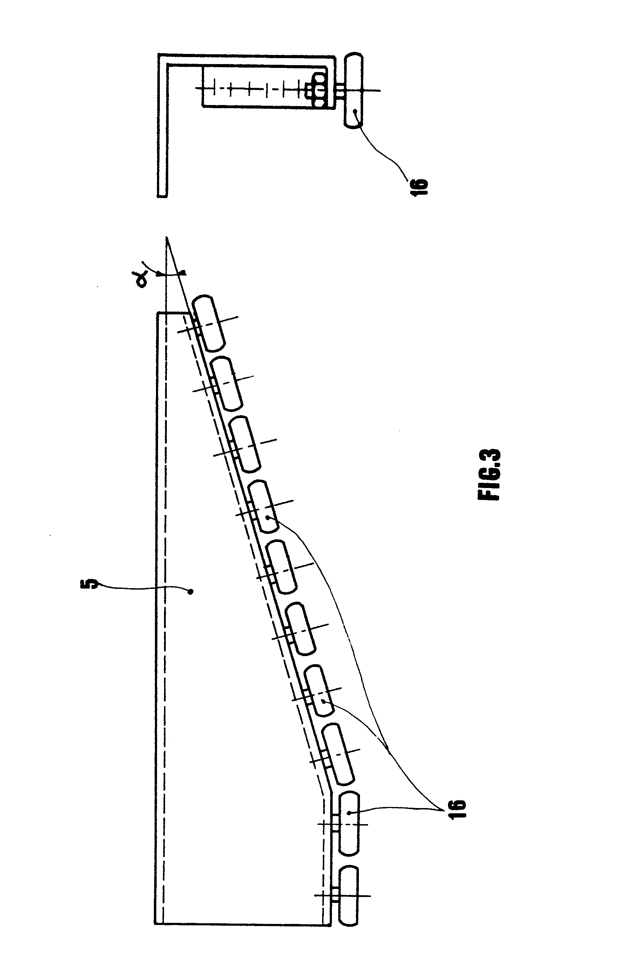

La figure 3 représente une vue en plan et de côté d'un support à galets.

La figure 4 précise la trajectoire des objets pendant leur chute libre sans butée (fig. 4A) ou avec butée avant (fig. 4B).

La figure 5 représente les positions de chute (P) et de basculement (Q) pour des objets de forme géométrique différente.

La figure 6 donne une vue en long du dispositif d'empilage proprement dit.

La figure 7 donne le détail de la disposition de la butée arrière.

Les figures 8 et 9 représentent le dispositif de réglage et de blocage des butées avant.

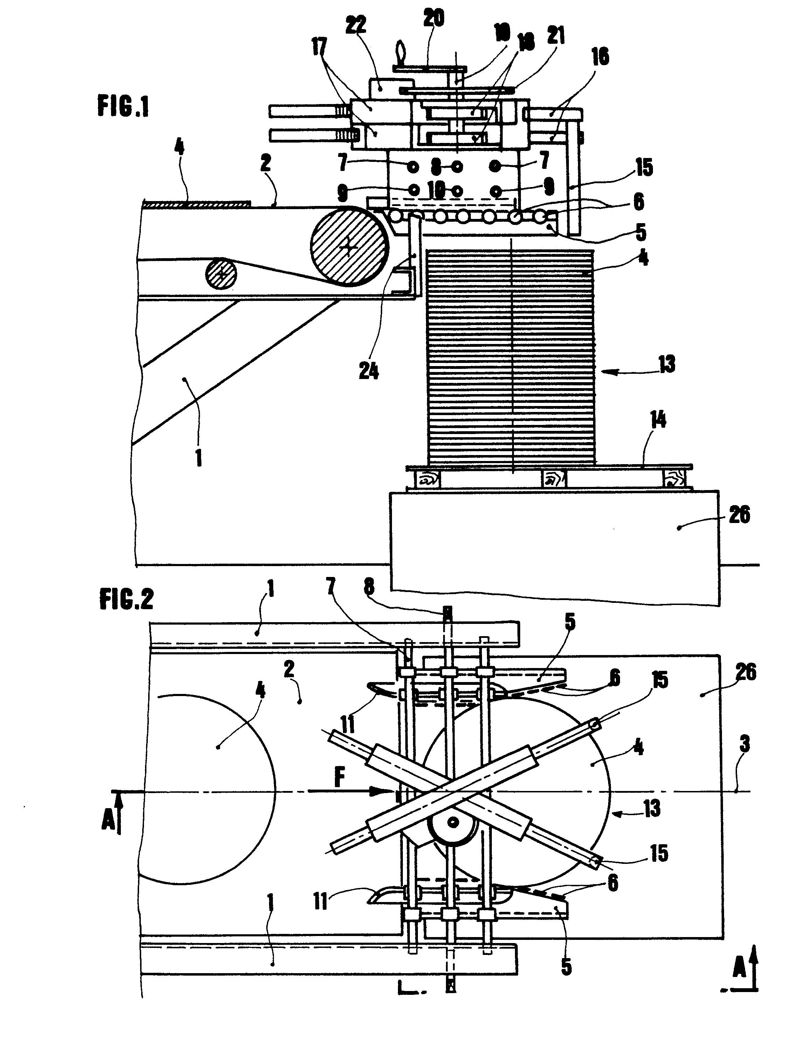

Les figures 1 et 2 représentent un bâti (1) supportant la bande transporteuse (2) qui défile suivant l'axe (3) dans le sens de la flèche (F). Elle transporte les objets plats à empiler (4), ici de forme circulaire, préalablement approximativement centrés à l'aide d'un dispositif connu (non représenté). Au niveau et à l'avant de la bande transporteuse, sont placés horizontalement deux supports divergents (5) à galets (6) dont l'extrémité avant fait avec l'axe de défilement (3) un angle ( $\alpha$ ) de 15°.

Les galets (6) sont montés fou sur leur axe et de façon quasi-jointive sur les supports (5).

Les supports (5) sont liés au bâti (1) par l'intermédiaire de deux guides transversaux (7) et d'un arbre (8) fileté aux deux extrémités au même pas mais en sens inverse, cet arbre engrènant avec des écrous correspondants, solidaires du support (5) de manière que leur écartement à l'entrée soit inférieur au diamètre (ou à la diagonale) des objets à empiler (4), la longueur des supports (5) étant suffisante pour que l'écartement de ceux-ci à leur extrémité aval soit supérieur ou égal au diamètre (ou à la diagonale) des objets à empiler. Un dispositif analogue -guides (9) et arbre fileté (10)- permet de déplacer symétriquement par rapport à l'axe de défilement (3) deux règles (12) à entrée convergente, en vue du centrage précis des objets à empiler entrant dans le dispositif d'empilage. Ces règles sont garnies intérieurement d'un revêtement antifriction.

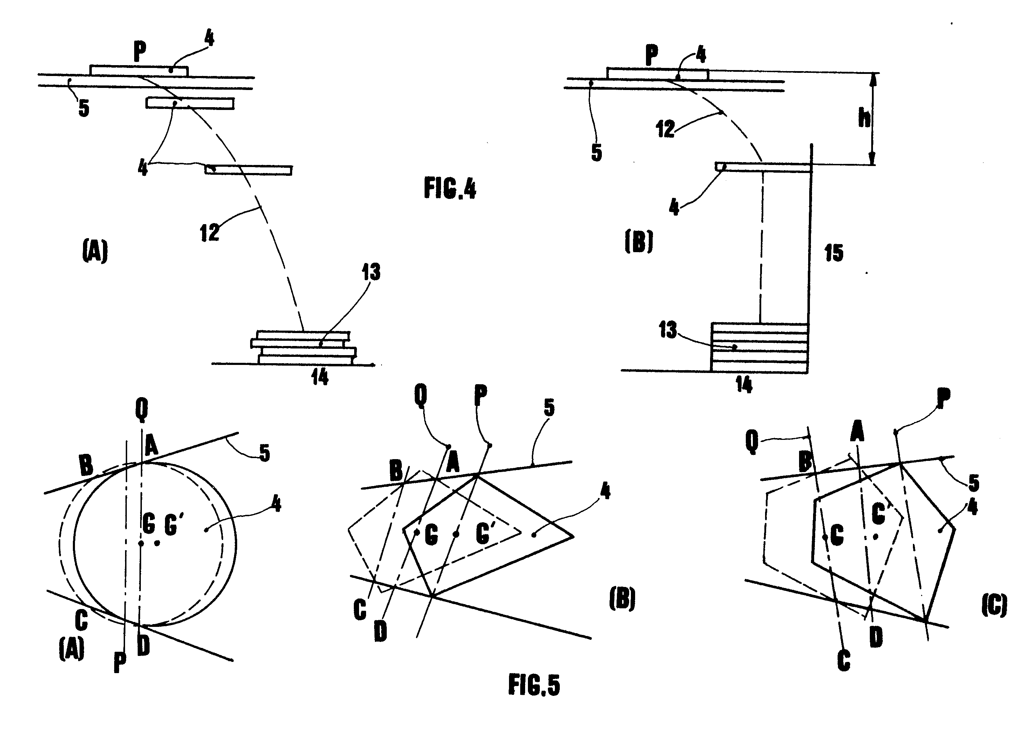

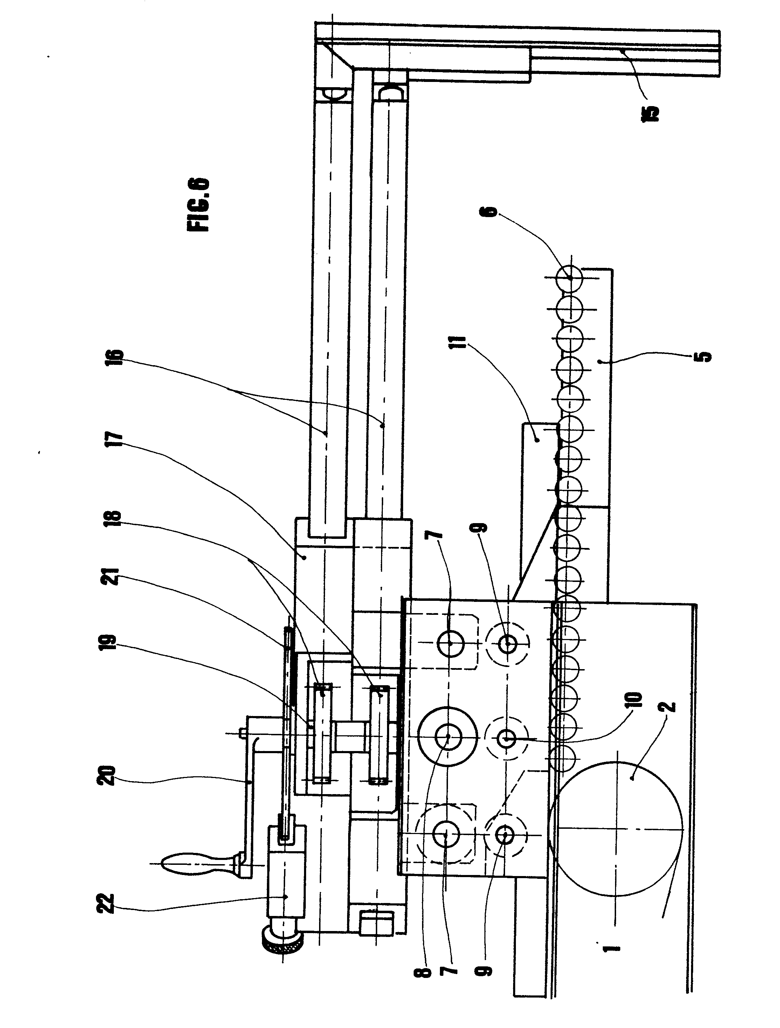

Lorsque l'objet (4) arrive à la position (P) (figure 5) où l'écartement des supports (5) est égal à son diamètre (ou sa diagonale) il tombe suivant la parabole (12) (fig. 4) sur la pile (13) en cours de formation, sur une embase (14) ou dans un conteneur (non représenté).

Cependant, entre la position Q où le centre de gravité de l'objet sort du polygone de sustentation résiduel (ABCD) et la position (P), l'objet est soumis à un moment de basculement dont le bras de levier est égal à la distance du centre de gravité G' à la droite P.

Pour éviter de ce fait un empilage irrégulier, la hauteur de chute libre (h) est donc limitée par une (ou des) butée(s) avant (15) à une valeur comprise de préférence entre 10 et 20 mm.

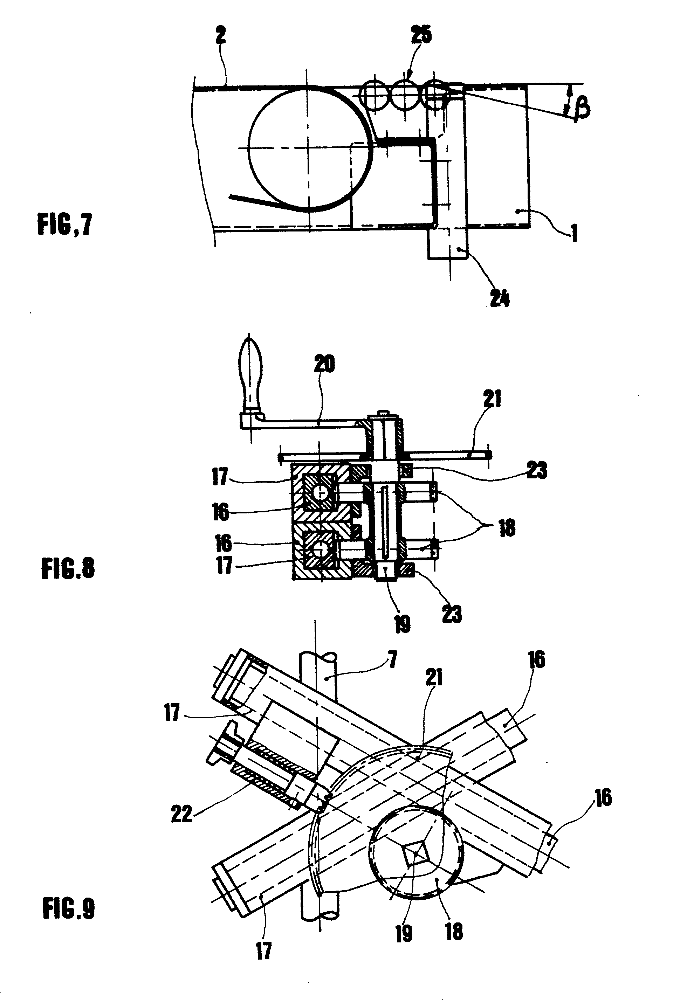

Ces butées avant (15 - fig. 1, fig. 6) sont constituées de cylindres métalliques, revêtus "d'Etalon". Elles sont fixées verticalement à l'extrémité de bras (16) à section carrée qui coulissent dans des glissières (17) fixées au bâti (1) dans l'axe de défilement (3) et disposées symétriquement par rapport à celui-ci. Les deux bras (15) sont munis sur leur face latérale verticale de crémaillères qui engrènent avec deux pignons dentés identiques (18) montés sur un même axe (19) manoeuvrable par la manivelle (20) et comportant la roue dentée de positionnement (21), arrêtée par le dispositif de blocage (22). L'ensemble axe-manivelle-pignons est monté sur des cornières (23 - fig. 8) solidaires des glissières (17).

La butée arrière (24 - fig. 7), de forme cylindrique circulaire, est réalisée en "Ertalon", et fixée verticalement au bâti (1) sur l'axe de défilement (3). L'extrémité supérieure de cette butée est dans le plan de la bande transporteuse (2) et présente un plan incliné vers l'aval faisant avec l'horizontale un angle ($\beta$) de 10°. Comme dans le cas représenté sur cette figure 7, on a placé de chaque côté de la butée (24), entre l'extrémité de la bande transporteuse (2) et cette butée (24), deux chemins de roulements (25), comportant des galets identiques à (6).

La pile d'objet en formation (13) sur son embase (14) repose sur une plateforme (26 - fig. 1) mobile en translation suivant deux axes horizontaux orthogonaux et un axe vertical. L'abaissement de cette plateforme est contrôlé par des moyens connus en fonction de la position du sommet de la pile en cours de formation (13).

Le dispositif suivant l'invention possède une grande simplicité et ne comporte aucun organe mobile autres que les galets (6), ce qui permet des empilages à fréquences assez élevée pouvant aller jusqu'à cinq objets/seconde, avec une grande sécurité de marche.

EXEMPLES

Des disques en alliage d'Al, type 1050, à l'état écroui de Ø 610 mm et de 1,20 mm d'épaisseur ont été empilés à la cadence de 40 disques à la minute.

Des disques en alliage d'Al, type 1200, à l'état écroui de Ø 710 mm et de 4 mm d'épaisseur ont été empilés à la cadence de 80 disques à la minute.

Des disques en alliage d'Al, type 1200, à l'état recuit de Ø 115 mm et de 4 mm d'épaisseur ont été empilés à la cadence de 120 disques à la minute.

REVENDICATIONS

1. Procédé pour empiler des objets plats de mêmes dimensions en plan, préalablement alignés, sur un convoyeur (2), caractérisé en ce qu'ils sont engagés à l'extrémité du convoyeur sur deux supports (5) divergents symétriques par rapport à l'axe de défilement (3) et dont l'écartement initialement inférieur au diamètre ou à la plus petite diagonale des objets considérés, atteint à l'extrémité opposée au moins le diamètre ou la plus grande diagonale des objets plats (4) transportés.

2. Procédé selon la revendication 1, caractérisé en ce que les objets sont arrêtés dans leur chute libre par une (ou des) butée(s) avant (15).

3. Procédé selon la revendication 2, caractérisé en ce que la hauteur de chute libre (h) est inférieure à 20 mm, de préférence comprise entre 10 et 20 mm.

4. Procédé selon l'une des revendications 2 ou 3, caractérisé en ce que l'empilage (13) d'objets plats (4) est limité par une butée axiale arrière (24) avec le jeu nécessaire.

5. Dispositif pour l'empilage d'objets plats (4) comprenant au moins un convoyeur (2), des supports divergents (5) et une embase (14) ou un réceptacle pour la formation de l'empilage (13), caractérisé en ce que les supports font des angles ($\alpha$) compris entre 1 et 15° par rapport au sens de défilement (3) des objets (4).

6. Dispositif selon la revendication 5, caractérisé en ce que les supports (5) sont munis de galets (6) quasi-jointifs, montés fou sur leur axe.

7. Dispositif selon l'une des revendications 5 ou 6, caractérisé en ce que les supports (5) sont réglables en position de façon symétrique par rapport à l'axe de défilement (3).

8. Dispositif selon l'une des revendications 5 à 7, caractérisé en ce que les objets sont centrés de façon précise sur l'axe de défilement (3) par des règles (11), réglables en position de façon symétrique par rapport à cet axe de défilement (3).

9. Dispositif selon les revendications 5 à 8, caractérisé en ce que les butées avant (15) sont réglables en position de façon symétrique par rapport à l'axe de défilement (3).

10. Dispositif selon la revendication 9, caractérisé en ce que les butées avant (15) sont montées à l'extrémité de bras (16) mobiles en translation dans des glissières (17), disposées symétriquement par rapport à l'axe de défilement (3) et mus par deux pignons identiques (18) montés sur un arbre (19) qui engrènent sur les crémaillères correspondantes, solidaires des bras (16).

11. Dispositif selon l'une des revendications 9 ou 10, caractérisé en ce que la position des butées avant (15) est fixée par une roue dentée (21) solidaire de l'axe (19) et arrêtée par un dispositif de blocage (22) adéquat.

12. Dispositif selon l'une des revendications 5 à 11, caractérisé en ce qu'il comporte une butée arrière axiale (24).

13. Dispositif selon la revendication 12, caractérisé en ce qu'entre le convoyeur (2) et la butée axiale (24) est disposé, de chaque côté de cette dernière, un chemin de roulement (25).

14. Dispositif selon l'une des revendications 9 à 13, caractérisé en ce que les butées (15, 24) sont constituées (ou revêtues) d'un produit antichoc.

1·5

**FIG.1**

**FIG.2**

25

5

α

16

16

FIG.3

3·5

FIG.4

FIG.5

(A)

(B)

(C)

P

Q

A

B

C

D

G G'

5

4

12

13

14

15

h

FIG.6

4.5

0145624

0145624

5·5

FIG,7

FIG.8

FIG.9